# FASCICULE DE BREVET EUROPEEN

(11) **EP 4 106 120 B1**
(45) Date de publication et mention de la délivrance du brevet: **04.06.2025**
(21) Numéro de dépôt: 22178558.7
(22) Date de dépôt: 13.06.2022
(51) Int. Cl.: H02G 5/08

(54) **COFFRET DE DÉRIVATION POUR JEU DE BARRES**
ABZWEIGKASTEN FÜR SAMMELSCHIENEN
JUNCTION BOX FOR BUSBARS

(30) Priorité: 14.06.2021 FR 2106264
(43) Date de publication de la demande: 21.12.2022
(73) Titulaire: Schneider Electric Industries SAS, 92500 Rueil-Malmaison (FR)
(72) Inventeur: LINARES, Louis, 38660 LA TERRASSE (FR); BOUCHARD, Jean-Luc, 38100 GRENOBLE (FR); BAROCCI, Christian, 38160 SAINT MARCELLIN (FR)
(74) Mandataire: Lavoix

(56) Documents cités:
- WO-A1-97/12434
- CN-A- 112 054 457
- CN-A- 112 420 419
- CN-U- 210 577 629

## Description

La présente invention concerne un coffret de dérivation pour jeu de barres.

Dans le domaine de la distribution électrique industrielle, il est connu d'utiliser des jeux de barres pour distribuer de l'énergie électrique depuis une source d'électricité jusqu'à des circuits électriques. Il est connu d'installer de tels jeux de barres dans des goulottes, plus couramment appelées « canalisations ».

Il est également connu de fixer un coffret de dérivation sur un jeu de barres, pour permettre le raccordement d'un circuit électrique au jeu de barres. Un tel coffret de dérivation comprend généralement des connecteurs, reliés électriquement au jeu de barres, un dispositif de distribution électrique, permettant d'alimenter un circuit électrique, et un dispositif de coupure, permettant soit de connecter entre eux, soit d'isoler, les connecteurs et le dispositif de distribution.

La fixation d'un tel coffret de dérivation au jeu de barres s'effectue à l'aide de crochets. Le démontage d'un tel coffret s'effectue généralement en manœuvrant ces crochets, depuis l'intérieur du coffret, jusqu'à les décrocher du jeu de barres. Pour des raisons de sécurité, il est nécessaire que le dispositif de coupure isole le dispositif de distribution des connecteurs lorsque le coffret est démonté du jeu de barres. Ainsi, il est connu d'équiper les coffrets de dérivation d'une porte, dont l'ouverture est nécessaire pour permettre la manœuvre des crochets, et dont l'ouverture provoque l'isolement du dispositif de distribution et des connecteurs.

Cependant, un tel système présente l'inconvénient d'être complexe, car l'ouverture de la porte du coffret est nécessaire pour démonter le coffret, ce qui est chronophage et peu pratique, en particulier dans des environnements industriels exigus. De plus, ce système nécessite d'équiper les coffrets de dérivation d'une porte, ce qui complexifie la fabrication du coffret et augmente ainsi son coût, et ce qui réduit la polyvalence d'un tel coffret. En effet, l'orientation du coffret n'est pas modifiable, car l'orientation de la porte est contrainte.

CN-A-112 420 419 A décrit un coffret de dérivation comprenant un boîtier et un mécanisme de verrouillage comprenant des crochets et des poignées accessibles depuis l'extérieur et actionnant les crochets. Le coffret de dérivation comprend un dispositif de coupure qui est adapté pour être basculé en configuration ouverte par une plaque d'arrêt reliée aux poignées, lorsque les poignées sont manœuvrées pour démonter le coffret. Un tel système n'est pas utilisable avec des dispositifs de coupure standards, et ne fournit aucune confirmation à un utilisateur de l'état ouvert du dispositif de coupure avant démontage du coffret.

C'est à ces inconvénients qu'entend plus particulièrement remédier l'invention en proposant un coffret de dérivation pour jeu de barres dont le montage et le démontage du jeu de barres sont facilités et sécurisés.

À cet effet, l'invention concerne un coffret de dérivation pour jeu de barres selon la revendication 1.

Grâce à l'invention, le montage et le démontage du coffret de dérivation s'effectuent sans nécessiter l'accès à l'intérieur du coffre, et de manière sécurisée, car le coffret ne peut être démonté que lorsque la barre de sécurité a été basculée en position de déverrouillage par un utilisateur. Le basculement de la barre de sécurité entraîne le basculement du dispositif de coupure en configuration ouverte, ce qui permet d'utiliser un dispositif de coupure standard. En outre, la barre de sécurité fournit une confirmation visuelle aisée de l'état ouvert ou fermé du dispositif de coupure, selon sa position.

Selon des aspects avantageux, mais non obligatoires de l'invention, le coffret de dérivation incorpore une ou plusieurs des caractéristiques suivantes, prises isolément ou selon toutes combinaisons techniquement admissibles :
- Le mécanisme de verrouillage comprend, en outre, un loquet de verrouillage, mobile entre une position de verrouillage, dans laquelle le loquet de verrouillage empêche le déplacement de la poignée de sa position de verrouillage vers sa position de déverrouillage, et une position de déverrouillage, dans laquelle le loquet de verrouillage n'empêche pas le déplacement de la poignée, le loquet de verrouillage étant configuré pour pouvoir être actionné de sa position de verrouillage vers sa position de déverrouillage à l'aide d'un outil par un utilisateur.
- Le mécanisme de verrouillage comprend un organe de rappel, exerçant un effort élastique sur le loquet de verrouillage, par rapport au boîtier, tendant à basculer le loquet de verrouillage de sa position de déverrouillage vers sa position de verrouillage ; le boîtier comprend un cran de blocage ; le loquet de verrouillage comprend un ergot, coopérant avec le cran de blocage pour maintenir le loquet de verrouillage en position de déverrouillage ; et la poignée comprend un taquet, permettant de désengager l'ergot du cran de blocage lorsque la poignée est basculée de sa position de verrouillage vers sa position de déverrouillage, de sorte à ramener le loquet de verrouillage en position de verrouillage sous l'effet de l'organe élastique de rappel.
- Le mécanisme de verrouillage comprend, en outre, un dispositif de blocage de la poignée, entraîné par la barre de sécurité et configuré pour que, en position de verrouillage de la barre de sécurité, la translation de la poignée selon l'axe de poignée est empêchée, et pour que, en position de déverrouillage de la barre de sécurité, la translation de la poignée n'est pas empêchée.
- La barre de sécurité est mobile entre la position de verrouillage et la position de déverrouillage par un mouvement de translation selon un axe de translation de barre parallèle à une face du boîtier et parallèle ou perpendiculaire à l'axe de poignée, la barre de sécurité comprend une crémaillère s'étendant selon l'axe de barre, et le dispositif de blocage de la poignée est une roue dentée, entraînée en rotation par la crémaillère autour d'un axe de roue perpendiculaire à l'axe de barre.
- La poignée comprend un pion de blocage, la roue dentée comprend une gorge et lorsque la barre de sécurité est en position de déverrouillage, la gorge s'étend selon un axe de gorge parallèle à l'axe de poignée, de sorte que le pion de blocage puisse s'engager dans la gorge lorsque la poignée est basculée de sa position de verrouillage vers sa position de déverrouillage, et lorsque la barre de sécurité est en position de verrouillage, la gorge s'étend selon un axe de gorge sécant avec l'axe de poignée, de sorte que le pion de blocage est en butée contre une surface périphérique de la roue dentée et ne peut pas s'engager dans la gorge.
- La roue dentée comprend deux gorges, les deux gorges s'étendant selon deux axes de gorge perpendiculaires entre eux, et lorsque la barre de sécurité est en position de déverrouillage, une première gorge s'étend selon un axe de gorge parallèle à l'axe de poignée et une deuxième gorge s'étend selon un axe perpendiculaire à l'axe de poignée, et lorsque la barre de sécurité est en position de verrouillage, les gorges s'étendent chacune selon un axe de gorge sécant et non-perpendiculaire avec l'axe de poignée.
- Le mécanisme de verrouillage comprend au moins deux organes de rappel exerçant chacun un effort élastique sur un crochet, par rapport au boîtier, tendant à déplacer les crochets en position de verrouillage, et comprend un organe de rappel exerçant un effort élastique sur la poignée, par rapport au boîtier, tendant à déplacer la poignée en position de verrouillage.
- Le boîtier comprend deux joues parallèles entre elles, le mécanisme de verrouillage comprend quatre crochets et deux poignées, chaque joue portant deux crochets et une poignée, la poignée portée par une joue étant mécaniquement reliée aux deux crochets portés par cette joue.

L'invention sera mieux comprise et d'autres avantages de celle-ci apparaitront plus clairement à la lumière de la description qui va suivre d'un mode de réalisation d'un coffret de dérivation, conforme à son principe, donnée uniquement à titre d'exemple et faite en référence aux dessins annexés dans lesquels :
[Fig. 1] La figure 1 est une vue en perspective d'une installation électrique comprenant un coffret de dérivation conforme à un premier mode de réalisation de l'invention et un jeu de barres;
[Fig. 2] La figure 2 est une vue en perspective du coffret de dérivation de la figure 1, dans une première configuration ;
[Fig. 3] La figure 3 est une vue en perspective, selon un autre angle de vue, du coffret de dérivation des figures 1 et 2, dans une deuxième configuration ;
[Fig. 4] La figure 4 est une vue de côté d'une partie du coffret de dérivation des figures 1 à 3, dans la première configuration ;
[Fig. 5] La figure 5 est une vue côté de la même partie du coffret de dérivation des figures 1 à 4, dans une troisième configuration ;
[Fig. 6] La figure 6 est une vue de côté de la même partie du coffret de dérivation des figures 1 à 5, dans la deuxième configuration ;
[Fig. 7] La figure 7 est une vue en perspective d'une autre partie du coffret de dérivation des figures 1 à 6, dans la première configuration ;
[Fig. 8] La figure 8 est une vue en perspective de la même autre partie du coffret de dérivation des figures 1 à 7, dans la deuxième configuration ;
[Fig. 9] La figure 9 regroupe trois inserts montrant, en vue de côté, trois étapes du démontage d'une partie du coffret de dérivation des figures 1 à 8 ; et
[Fig. 10] La figure 10 est une vue de côté d'une partie d'un coffret de dérivation conforme à un deuxième mode de réalisation de l'invention.

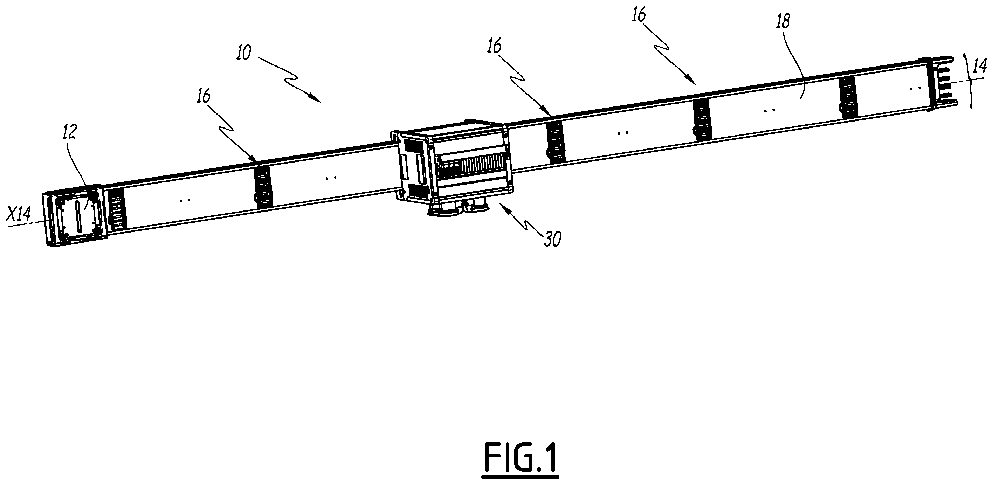

Une installation électrique 10 est représentée à la figure 1. Cette installation électrique comprend une source d'électricité 12 ainsi qu'un jeu de barres 14, connecté à la source d'électricité 12. Le jeu de barres comprend en pratique plusieurs barres conductrices, par exemple en cuivre ou en aluminium. Dans l'exemple, le jeu de barres comprend cinq barres conductrices, dont une est reliée à un neutre de la source d'électricité, trois sont reliées à des phases de la source d'électricité et une est reliée à la terre. Ainsi, dans l'exemple, la source d'électricité 12 est une source délivrant un courant triphasé et un neutre. La barre conductrice reliée à la terre n'est pas visible à la figure 1.

Le jeu de barres 14 permet de distribuer une puissance électrique délivrée par la source d'électricité 12 à des circuits électriques qui y sont raccordés. Pour cela, plusieurs groupes de connecteurs 16 sont raccordés au jeu de barres 14. Dans l'exemple, l'installation électrique 10 comprend six groupes de connecteurs 16. En pratique, le nombre de groupes de connecteurs 16 varie en fonction de la longueur du jeu de barres 14 et du nombre de circuits électriques devant être raccordés au jeu de barres. En outre, dans l'exemple, chaque groupe de connecteurs comprend cinq connecteurs électriques.

Le jeu de barres 14 est protégé à l'intérieur d'une goulotte électrique 18, autrement dit dans une « canalisation ». De préférence, cette goulotte électrique est réalisée en matériau polymère. Ainsi, la goulotte électrique est électriquement isolante. La goulotte électrique 18 porte également les groupes de connecteurs 16.

Le jeu de barres 14 et la goulotte électrique 18 s'étendent selon un axe longitudinal X14. Sur la figure 1, l'axe longitudinal X14 est horizontal. En pratique, selon les spécificités de l'installation électrique 10, l'axe longitudinal X14 est horizontal, vertical, ou de toute autre orientation.

La source d'électricité 12 est fixée à une première extrémité du jeu de barres 14 et de la goulotte électrique 18, selon l'axe X14. À l'extrémité opposée de la goulotte électrique, l'extrémité du jeu de barres est apparente, ce qui permet d'y raccorder un deuxième jeu de barres et une deuxième goulotte électrique, de sorte à prolonger l'installation électrique 10. Lorsqu'une telle prolongation n'est pas nécessaire, un cache est alors installé sur l'extrémité opposée de la goulotte électrique, pour masquer l'extrémité du jeu de barres.

L'installation électrique 10 comprend également un coffret de dérivation 30, fixé sur la goulotte électrique 18 et permettant de relier le jeu de barres 14 à un circuit électrique non-représenté, afin d'alimenter ce circuit électrique.

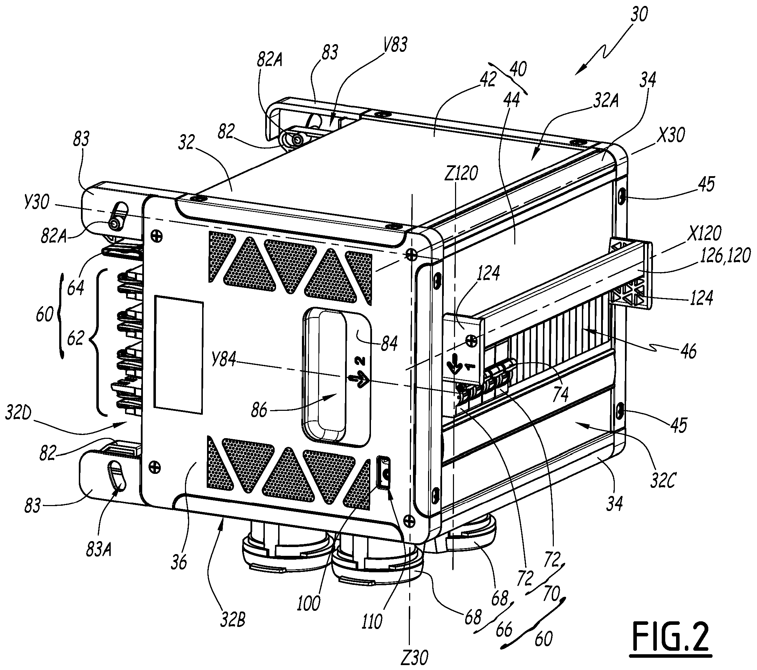

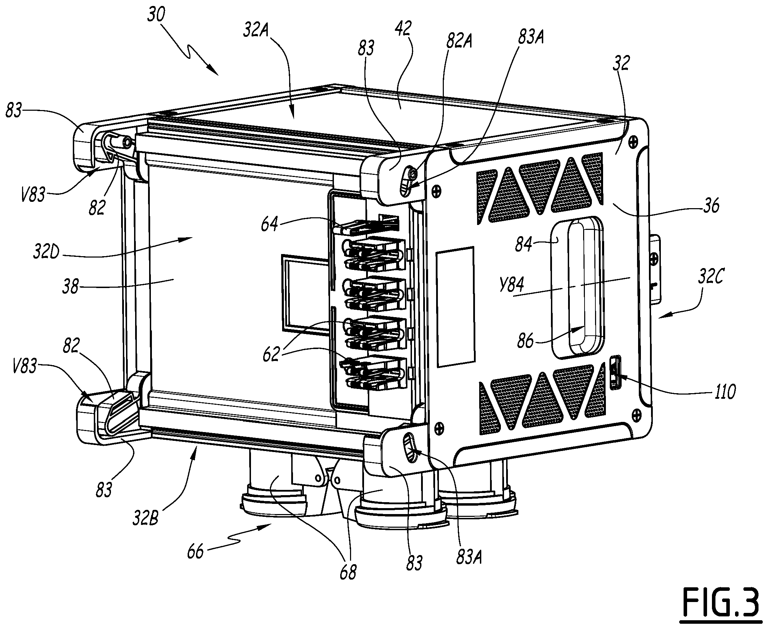

Le coffret de dérivation 30, mieux visible sur les figures 2 et 3, comprend un boîtier 32. Le boîtier 32 est de forme parallélépipédique, et de préférence cubique. Ainsi, le boîtier 32 présente six côtés.

On note X30 un axe de largeur, Y30 un axe de profondeur et Z30 un axe de hauteur du coffret de dérivation.

Dans l'exemple représenté, le boîtier 32 comprend deux traverses 34 qui s'étendent parallèlement à l'axe X30 et un fond 38 qui s'étend parallèlement aux traverses 34 et qui forment ensemble une armature du boîtier.

Avantageusement, lorsque le coffret de dérivation est fixé sur la goulotte électrique 18, l'axe de largeur X30 du coffret est parallèle à l'axe longitudinal X14 du jeu de barres 14.

Le boîtier 32 comprend deux joues 36, parallèles entre elles. Les joues 36 sont planes et globalement rectangulaires, et avantageusement globalement carrées, avec des découpes. Les traverses 34 s'étendent entre les deux joues 36 et sont avantageusement disposées au niveau de deux coins adjacents des joues. Le fond 38 s'étend entre les deux joues 36, avantageusement entre deux coins adjacents des joues, à l'opposé des traverses 34. Ainsi, les joues 36 ferment deux des six côtés du boîtier 32. Les joues 36 sont situées de part et d'autre du boîtier 32, selon l'axe de largeur X30.

Les quatre côtés du boîtier 32 n'étant pas fermés par les joues 36 sont notés 32A, 32B, 32C et 32D et correspondent respectivement au côté supérieur, inférieur, avant et arrière du boîtier 32, selon l'orientation des figures 2 et 3.

Le fond 38 s'étendant entre les joues 36, il ferme l'un des côtés 32A, 32B, 32C et 32D du boîtier 32. Lorsque le coffret de dérivation est fixé sur la goulotte électrique 18, le fond 38 est parallèle avec la goulotte électrique, et de préférence en contact avec la goulotte électrique.

En variante, le boîtier 32 comprend quatre traverses 34 qui s'étendent entre les joues 36 en étant disposées aux quatre coins des joues. Dans une telle variante, le fond 38 s'étend entre deux traverses 34 adjacentes, de sorte à fermer l'un des côtés 32A, 32B, 32C et 32D du boîtier.

Le boîtier 32 comprend trois plastrons 40, perpendiculaires aux joues 36. Parmi les trois plastrons 40, deux sont parallèles entre deux et perpendiculaires au fond 38, et un est parallèle au fond 38. Chaque plastron 40 s'étend entre deux traverses 34 ou entre une traverse et le fond. Ainsi, les trois plastrons 40 ferment trois des six côtés du boîtier 32.

Les joues 36 et les plastrons 40 sont ainsi fixés sur l'armature du boîtier 32, c'est-à-dire sur les traverses 34 et sur le fond 38.

Grâce aux joues 36, au fond 38 et aux plastrons 40, le boîtier 32 est fermé, c'est-à-dire que l'intérieur du boîtier n'est pas accessible.

Dans l'exemple, deux des trois plastrons 40 sont des plastrons pleins 42, c'est-à-dire des plastrons ne présentant aucune ouverture. Dans l'exemple, ces deux plastrons pleins 42 sont parallèles entre eux et perpendiculaires au fond 38. Ainsi, les deux plastrons pleins 42 sont situés de part et d'autre du boîtier 32, selon l'axe de hauteur Z30.

Dans l'exemple, l'un des trois plastrons 40 est un plastron ajouré 44, c'est-à-dire qu'il comprend une fenêtre 46. Dans l'exemple, le plastron ajouré 44 est parallèle au fond 38. Ainsi, le fond et le plastron ajouré sont situés de part et d'autre du boîtier 32, selon l'axe de profondeur Y30.

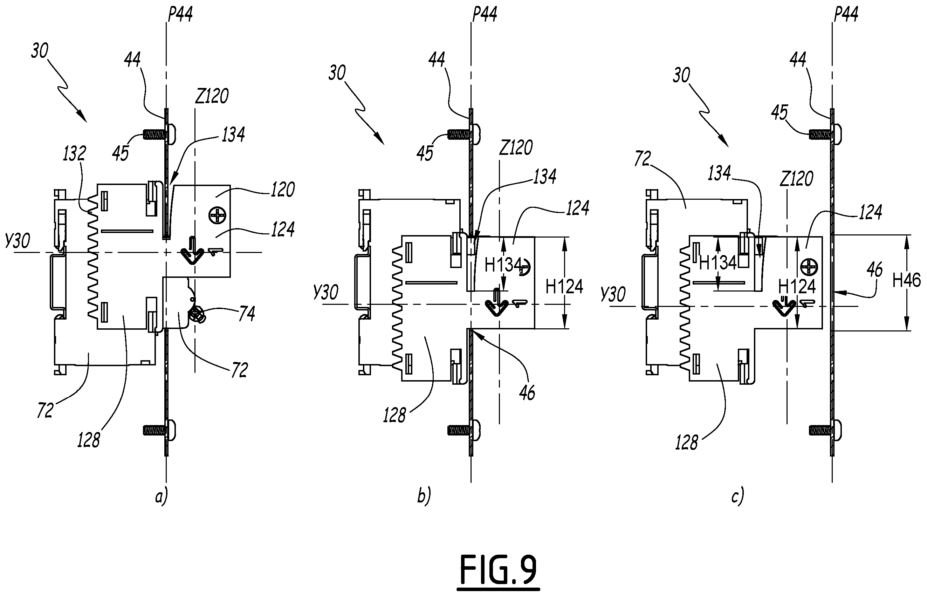

Comme visible sur les figures 2 et 9, le plastron ajouré 44 est fixé aux traverses 34 à l'aide de vis 45, dans l'exemple à l'aide de quatre vis 45.

De manière générale, les plastrons 40 sont fixés à l'armature du boîtier 32, c'est-à-dire aux traverses 34 et/ou au fond 38.

Le coffret de dérivation 30 comprend un système de distribution électrique 60.

Le système de distribution électrique 60 comprend des connecteurs électrique d'entrée 62, avantageusement disposés au niveau du fond 38 du boîtier 32.

Dans l'exemple, le système de distribution électrique comprend quatre connecteurs électrique d'entrée 62, prévus pour coopérer avec les connecteurs électriques d'un groupe de connecteurs 16. Ainsi, lorsque le coffret est fixé sur la goulotte électrique 18, un connecteur 62 est électriquement connecté à la barre d'alimentation du jeu de barres 14 reliée au neutre de la source d'électricité 12, par l'intermédiaire d'un connecteur d'un groupe de connecteurs 16, et trois autres connecteurs 62 sont chacun électriquement connectés à une barre d'alimentation du jeu de barres reliée à une phase de la source d'électricité, par l'intermédiaire d'un connecteur du même groupe de connecteurs 16. Grâce aux connecteurs 62, le coffret 30 est ainsi alimenté, dans l'exemple, en courant triphasé avec neutre.

Avantageusement, le système de distribution électrique 60 comprend également un connecteur de terre 64, prévu pour coopérer avec les connecteurs 16. Ainsi, lorsque le coffret 30 est fixé sur la goulotte électrique 18, le connecteur de terre 64 est électriquement connecté à la barre d'alimentation du jeu de barres 14 reliée à la terre.

Le système de distribution électrique 60 comprend un dispositif de distribution électrique de sortie 66, permettant d'alimenter un circuit électrique aval. Dans l'exemple, ce dispositif comprend quatre prises électriques 68. En variante, le dispositif comprend un nombre différent de prises électriques 68, par exemple une ou deux.

En pratique, le dispositif de distribution électrique de sortie 66 comprend toute combinaison de connecteurs et/ou de composants permettant d'alimenter en énergie électrique le circuit électrique aval. Ces connecteurs et/ou composant sont, par exemple, des câbles électriques, des prises électriques, des borniers, des cosses, et/ou des connecteurs. À titre d'exemple, le circuit électrique aval comprend des charges électriques qui sont par exemple des armoires électriques, des moteurs, des prises électriques, des borniers, des cosses et/ou des connecteurs.

Ainsi, le système de distribution électrique 60 permet d'alimenter en énergie électrique une ou plusieurs charges électriques raccordée(s) au dispositif de distribution électrique de sortie 66, à partir de l'alimentation fournie par le jeu de barres 14, par l'intermédiaire des connecteurs électriques d'entrée 62.

Le système de distribution électrique 60 comprend en outre un dispositif de coupure 70.

Le dispositif de coupure 70 est électriquement connecté d'une part aux connecteurs électriques d'entrée 62 et d'autre part au dispositif de distribution électrique de sortie 66.

Dans l'exemple, le dispositif de coupure 70 comprend quatre disjoncteurs 72.

Chaque disjoncteur 72 est commutable entre une configuration fermée et une configuration ouverte.

En configuration fermée, chaque disjoncteur 72 relie électriquement une prise électrique 68 du dispositif de distribution électrique de sortie 66 aux connecteurs électriques d'entrée 62. Ainsi, un disjoncteur 72 alimente une prise 68 du dispositif de distribution électrique de sortie 66.

En configuration ouverte, chaque disjoncteur 72 isole électriquement la prise 68 du dispositif de distribution électrique de sortie 66 des connecteurs électriques d'entrée 62.

Ainsi, de manière générale, le dispositif de coupure 70 est commutable entre une configuration fermée, dans laquelle tous les disjoncteurs 72 sont en configuration fermée, c'est-à-dire que le dispositif de coupure connecte les connecteurs électriques d'entrée 62 au dispositif de distribution électrique de sortie 66, et une configuration ouverte, dans laquelle tous les disjoncteurs 72 sont en configuration ouverte, c'est-à-dire que le dispositif de coupure isole les connecteurs électriques d'entrée du dispositif de distribution électrique de sortie.

En variante, le dispositif de coupure 70 est en configuration fermée lorsqu'au moins un disjoncteur 72 est en configuration fermée, c'est-à-dire qu'au moins une partie du dispositif de distribution électrique est alimenté.

En outre, chaque disjoncteur 72 comprend un levier de commutation 74, mobile entre une position fermée dans laquelle le disjoncteur est en configuration fermée, et une position ouverte, dans laquelle le disjoncteur est en configuration ouverte.

Ici, à titre d'exemple, la configuration fermée d'un disjoncteur 72 correspond à la position de son levier de commutation basculée du côté du plastron 42 visible en partie supérieure des figures 2 et 3.

Les leviers de commutation 74 sont prévus pour être actionnables à la main par un utilisateur entre leur position fermée et leur position ouverte.

Lorsqu'ils sont destinés à être commutés simultanément, les leviers de commutation 74 des quatre disjoncteurs 72 forment ensemble un levier de commutation du dispositif de coupure 70.

Les disjoncteurs 72 sont essentiellement disposés à l'intérieur du boîtier 32, sur le côté du boîtier comprenant le plastron ajouré 44, de sorte que les leviers de commutation 74 s'étendent en-dehors du boîtier 32, au travers de la fenêtre 46 du plastron ajouré. Les leviers de commutation peuvent donc être commutées depuis l'extérieur du boîtier 32.

Dans l'exemple, les disjoncteurs 72 sont donc disposés sur le côté du boîtier parallèle au fond 38. En variante, les disjoncteurs sont disposés sur un côté du boîtier perpendiculaire au fond 38 et aux joues 36.

De plus, les disjoncteurs 72 sont, à titre d'exemple, disposés au plus proche de l'une des deux joues 36.

Dans l'exemple, le dispositif de coupure 70 comprend avantageusement un bloc inerte 76, disposé de manière adjacente aux disjoncteurs 72, selon l'axe de largeur X30. Le bloc inerte 76 permet de remplir l'espace laissé libre entre les disjoncteurs 72 et la joue 36 la plus éloignée des disjoncteurs 72, de sorte que l'intérieur du boîtier 32 n'est pas apparent au travers de la fenêtre 46 du plastron ajouré 44. Ainsi, la largeur cumulée des disjoncteurs 72 et du bloc inerte 76 est sensiblement égale à la largeur de la fenêtre 46, les largeurs étant mesurées selon l'axe de largeur X30.

Le coffret de dérivation 30 comprend un mécanisme de verrouillage 80.

Le mécanisme de verrouillage 80 permet de fixer, et de verrouiller, le coffret de dérivation 30 au jeu de barres 14 et à la goulotte électrique 18.

Pour cela, le mécanisme de verrouillage 80 comprend des crochets 82, dans l'exemple quatre crochets, montés mobiles par rapport au boîtier 32 entre une position de verrouillage, dans laquelle le boîtier est fixé, et verrouillé, sur le jeu de barres 14, et une position de déverrouillage, dans laquelle le boîtier n'est pas verrouillé sur le jeu de barres, et est détachable du jeu de barres.

Dans l'exemple, les crochets 82 sont montés pivotants par rapport au boîtier 32.

Dans l'exemple, les crochets s'étendent depuis les joues 36 du boîtier 32, selon l'axe de profondeur Y30 du boîtier, en s'éloignant du fond 38 et du plastron ajouré 44.

Dans l'exemple, chaque joue 36 porte deux crochets 82, disposés aux deux extrémités de la joue, selon l'axe de hauteur Z30.

Chaque crochet 82 est logé dans un volume V83 en forme de dièdre rentrant défini par une équerre 83 qui s'étend à l'opposé du plastron ajouré 44, à partir d'un des coins du fond 38, parallèlement à l'axe Y30. Chaque crochet 82 est ainsi protégé mécaniquement quand le coffret de dérivation 30 est séparé du jeu de barres 14. En particulier, les volumes V83 permettent de protéger les crochets 82 lorsque le coffret de dérivation 30 est transporté ou posé sur un plan de travail.

Chaque équerre 83 est pourvue d'une encoche 83A, et deux de ces équerres reçoivent un pion de repérage 82A solidaire du crochet 82 reçu dans son volume V83. En d'autres termes, deux crochets 82 comprennent des pions de repérage 82A reçus dans des encoches 83A.

En pratique, les deux équerres recevant les pions de repérage 82A sont alignées selon l'axe de largeur X30, c'est-à-dire qu'elles sont situées de part et d'autre du fond 38, et ces deux équerres sont les deux équerres les plus proches du connecteur de terre 64, selon l'axe de hauteur Z30. Les pions de repérage 82A permettent ainsi de repérer la position du connecteur de terre 64 parmi le système de distribution électrique 60, ce qui facilite le positionnement du coffret de dérivation 30 et son alignement avec le groupe de connecteurs 16 du jeu de barres 14 lors de l'installation du coffret sur le jeu de barres.

Les crochets 82 sont montrés en position de verrouillage à la figure 2, et en position de déverrouillage à la figure 3.

En variante, le mécanisme de verrouillage 80 comprend d'autres moyens de verrouillage sur le jeu de barres 14, comme par exemple des loquets, en remplacement des crochets 82.

Le mécanisme de verrouillage 80 comprend également des poignées 84. Dans l'exemple, le mécanisme de verrouillage comprend deux poignées et chaque joue 36 porte une poignée 84.

Les poignées 84 sont manœuvrables depuis l'extérieur du boîtier 32.

Les poignées 84 sont mobiles en translation selon un axe de poignée Y84 parallèle à l'axe de profondeur Y30 du coffret de dérivation 30, entre une position de verrouillage, dans laquelle les crochets 82 sont en position de verrouillage, et une position de déverrouillage, dans laquelle les crochets sont en position de déverrouillage.

Autrement dit, les poignées sont mobiles dans un mouvement d'éloignement-rapprochement du fond 38 entre leur position de verrouillage et leur position de déverrouillage.

En pratique, les poignées 84 sont guidées en translation par les joues 36, au moyen de nervures 36A ménagées sur les faces internes des joues 36 et contre lesquelles glissent les poignées 84.

En outre, dans l'exemple, les poignées sont en position de verrouillage lorsqu'elles sont rapprochées du fond 38 et sont en position de déverrouillage lorsqu'elles sont éloignées du fond 38.

Dans l'exemple, chaque poignée 84 permet d'entraîner le mouvement de deux crochets 82.

Comme visible aux figures 2 et 3, chaque poignée 84 comprend une cavité externe 86, permettant la prise en main de la poignée par un utilisateur afin de faciliter son déplacement entre les positions de verrouillage et de déverrouillage.

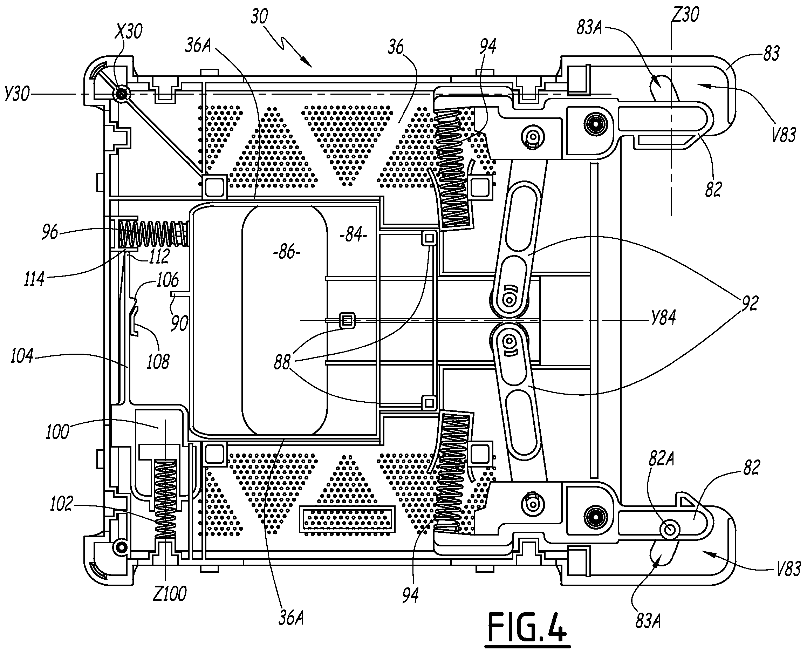

De plus, comme visible aux figures 4, 5 et 6, chaque poignée 84 comprend trois pions 88, et, avantageusement, un taquet 90.

Dans l'exemple, les trois pions 88 sont disposés en triangle, c'est-à-dire qu'un pion 88 est disposé au centre de la poignée, autrement dit sur l'axe de poignée Y84, qui est avantageusement un axe de symétrie de la poignée, et que deux pions 88 sont disposés de part et d'autre de l'axe de poignée Y84. La poignée comprend ainsi un pion central et deux pions périphériques.

Sur les figures 4, 5 et 6, seule une joue 38 ainsi qu'une partie du mécanisme de verrouillage 80 sont représentés, en pratique les crochets 82 et la poignée 84 portés par cette joue. En outre, sur ces figures, la joue et le mécanisme de verrouillage sont vus depuis l'intérieur du coffret de dérivation 30. Ainsi, les pions 88 sont visibles sur ces figures, mais ne sont pas visibles depuis l'extérieur du boîtier 32.

Comme visible sur les figures 4, 5 et 6, le mécanisme de verrouillage 80 comprend des bras 92 de transmission d'effort. Chaque bras de transmission est relié d'une part à la poignée 84 et d'autre part à un crochet 82. Ainsi, chaque bras de transmission permet d'entraîner le pivotement d'un crochet à partir de la translation de la poignée.

Avantageusement, le mécanisme de verrouillage comprend des organes de rappel élastiques 94, dans l'exemple quatre ressorts, qui exercent chacun un effort élastique sur un crochet 82, par rapport au boîtier 32, cet effort tendant à basculer les crochets en position de verrouillage. Ainsi, la position de verrouillage des crochets est une position stable.

En pratique, le mécanisme de verrouillage comprend autant d'organes de rappel élastiques 94 que de crochets 82.

Avantageusement, le mécanisme de verrouillage comprend des organes de rappel élastique 96, dans l'exemple deux ressorts, qui exercent chacun un effort élastique sur une poignée 84, par rapport au boîtier 32, tendant à repousser les poignées en position de verrouillage. Ainsi, la position de verrouillage des poignées est une position stable.

En pratique, le mécanisme de verrouillage comprend autant d'organes de rappel élastiques 96 que de poignées 84.

Grâce aux ressorts 94 et 96, l'actionnement des poignées 84 par un utilisateur est nécessaire pour translater les poignées 84 et les crochets 82 en position de déverrouillage. Ainsi, le coffret de dérivation 30 ne peut être déverrouillé et démonté du jeu de barres 14 que lorsque les poignées sont maintenues en position de déverrouillage par un utilisateur.

Le mécanisme de verrouillage 80 comprend deux loquets de verrouillage 100, mobiles entre une position de verrouillage, dans laquelle les loquets de verrouillage empêchent le déplacement des poignées 84 de leur position de verrouillage vers leur position de déverrouillage, et une position de déverrouillage, dans laquelle les loquets de verrouillage n'empêchent pas le déplacement des poignées.

En pratique, et comme visible sur les figures 4 à 6, chaque joue 36 porte un loquet de verrouillage 100, disposé avantageusement à l'intérieur du boîtier 32, et chaque loquet de verrouillage permet de bloquer le déplacement d'une poignée 84. Ainsi, chaque loquet est associé à une poignée.

Dans l'exemple, chaque loquet de verrouillage 100 est mobile en translation selon un axe de loquet Z100, perpendiculairement à l'axe de poignée Y84 et avantageusement parallèle à l'axe de hauteur Z30 du coffret.

Dans l'exemple, chaque loquet 100 est prévu pour, lorsqu'il est en position de verrouillage, être en contact avec une poignée 84 afin d'empêcher son déplacement. Autrement dit, les poignées peuvent être bloquées en position de verrouillage par les loquets de verrouillage.

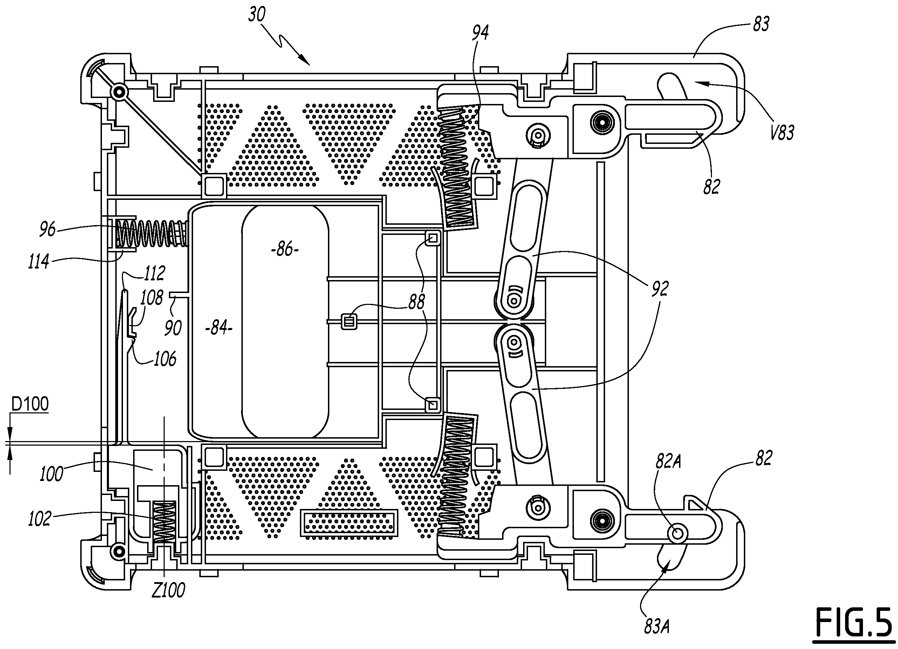

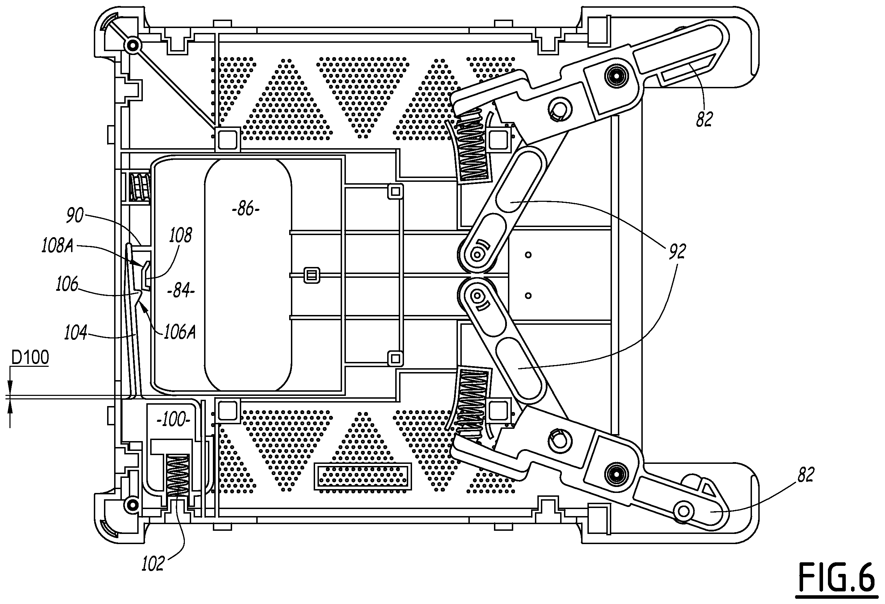

Lorsqu'un loquet de verrouillage 100 est en position de déverrouillage, il est éloigné de la poignée 84 associée, d'une distance D100 non-nulle, mesurée selon l'axe de loquet Z100. Cette position est illustrée aux figures 5 et 6.

Le mécanisme de verrouillage 80 comprend des organes de rappel élastique 102, dans l'exemple deux ressorts 102. Dans l'exemple, chaque ressort 102 exerce un effort élastique sur un loquet de verrouillage 100, par rapport au boîtier 32, tendant à translater les loquets de verrouillage en position de verrouillage.

Avantageusement, chaque loquet de verrouillage comprend une tige 104, qui s'étend selon l'axe de loquet Z100 et qui comprend un ergot 106.

L'ergot 106 d'une tige 104 est prévu pour coopérer avec un cran de blocage 108 qui fait partie du boîtier 32, de sorte à bloquer la position du loquet de verrouillage 100 selon l'axe Z100. Dans l'exemple, le boîtier 32 comprend alors deux crans de blocage 108, portés par les faces internes des deux joues 36.

Ainsi, lorsqu'un loquet de verrouillage 100 est en position de déverrouillage, il est maintenu dans cette position par blocage de l'ergot 106 contre le cran de blocage 108, malgré l'effort exercé par le ressort 102, par des surfaces globalement perpendiculaires à l'axe Z100, comme visible à la figure 5.

Lorsqu'un loquet de verrouillage 100 est en position de verrouillage, il est maintenu dans cette position sous l'effet de l'effort exercé par le ressort 102 et, avantageusement, par blocage de la pointe 112 de la tige 104, qui est en butée contre une nervure 114 du boîtier 32, comme visible à la figure 4.

Chaque loquet de verrouillage 100 est en outre accessible au travers d'une ouverture 110 ménagée dans le boîtier 32. Ainsi, le boîtier 32 comprend deux ouvertures 110, qui sont, dans l'exemple, ménagées dans les deux joues 36.

Les loquets de verrouillage 100 sont prévus pour être manœuvrés de leur position de verrouillage vers leur position de déverrouillage par un utilisateur, au travers des ouvertures 110. Par exemple, un utilisateur peut exercer un effort sur un loquet de verrouillage, de préférence à l'aide d'un outil pour une raison de sécurité et normative, comme par exemple un tournevis à pointe plate, de sorte à déplacer le loquet selon l'axe Z100 jusqu'à sa position de déverrouillage, à l'encontre de l'effort élastique exercé par le ressort 102. En pratique, l'effort exercé par un utilisateur est suffisant pour faire glisser une surface inclinée 106A de l'ergot 106 contre une surface inclinée 108A du cran de blocage 108. En outre, au cours de ce mouvement, le ressort 102 est progressivement compressé. À l'issu de ce mouvement, le loquet de verrouillage est maintenu en position de déverrouillage par le blocage de l'ergot 106 contre le cran de blocage 108.

Lorsqu'un loquet de verrouillage est en position de déverrouillage, la poignée 84 disposée dans la même joue 36 est déplaçable jusqu'à sa position de déverrouillage. Ainsi, les deux loquets de verrouillage 100 doivent être en position de déverrouillage pour pouvoir déverrouiller le coffret 30 du jeu de barres 14.

Lorsqu'une poignée 84 est translatée jusqu'en position de déverrouillage par un utilisateur, son taquet 90 entre en contact avec la tige 104 du loquet de verrouillage associé, jusqu'à déformer de manière élastique la tige. Cette configuration est visible à la figure 6.

Cette déformation élastique permet d'éloigner l'ergot 106 du cran de blocage 108, c'est-à-dire de désengager l'ergot du cran de blocage. Ainsi, lorsque la tige 104 est déformée, l'ergot 106 n'est pas bloqué contre le cran de blocage 108, ce qui permet au loquet de verrouillage 100 d'être entraîné en mouvement le long de l'axe Z100, sous l'effet du ressort 102. Le loquet de verrouillage est alors déplacé en direction de la poignée 84, jusqu'à entrer en contact avec la poignée, qui est située, selon l'axe de loquet Z100, en regard du loquet, c'est-à-dire jusqu'à ce que la distance D100 soit égale à zéro. Le loquet est alors situé entre sa position de verrouillage et sa position de déverrouillage, et est maintenu contre la poignée sous l'effet du ressort 102.

Lorsque la poignée 84 est relâchée par l'utilisateur, elle se déplace en translation jusqu'en position de verrouillage sous l'effet de l'un des deux ressorts 96, jusqu'à ne plus empêcher le déplacement du loquet de verrouillage 100 vers sa position de verrouillage, c'est-à-dire jusqu'à ne plus être située en regard du loquet, selon l'axe de loquet Z100. Le loquet de verrouillage translate alors en position de verrouillage, sous l'effet du ressort 102.

En d'autres termes, le taquet 90 permet de désengager l'ergot 106 du cran de blocage 108, de sorte que le loquet de verrouillage est automatiquement ramené en position de verrouillage sous l'effet du ressort 102, même si ce retour en position de verrouillage ne s'effectue que dans un second temps, après le relâchement de la poignée 84.

Ainsi, le déplacement en translation des loquets de verrouillage 100 en position de déverrouillage s'effectue par un utilisateur, avant l'actionnement des poignées 84 vers leur position de déverrouillage, et le déplacement en translation des loquets en position de verrouillage s'effectue sans intervention d'un utilisateur, dès que les poignées 84 sont relâchées et ramenées en position de verrouillage.

Le mécanisme de verrouillage 80 comprend une barre de sécurité 120, mobile entre une position de verrouillage, dans laquelle la barre de sécurité empêche le déplacement des poignées 84 de leur position de verrouillage vers leur position de déverrouillage, et une position de déverrouillage, dans laquelle la barre de sécurité n'empêche pas le déplacement des poignées et dans laquelle l'ensemble des disjoncteurs 72 sont commutés en configuration ouverte, c'est-à-dire dans laquelle le dispositif de coupure 70 est commuté en configuration ouverte.

La barre de sécurité 120 s'étend selon un axe longitudinal X120 parallèle à l'axe X30.

Avantageusement, la barre de sécurité 120 est mobile en translation, selon un axe de translation de barre Z120 parallèle au plastron ajouré 44 à proximité duquel les disjoncteurs 72 sont installés. L'axe de translation de barre Z120 est en outre perpendiculaire à l'axe de largeur X30 du coffret de dérivation 30. Dans l'exemple, l'axe de translation de barre Z120 est parallèle à l'axe de hauteur Z30 du coffret et perpendiculaire à l'axe de poignée Y84.

Comme mieux visible aux figures 2, 7, 8 et 9, en pratique, la barre de sécurité 120 s'étend partiellement en-dehors du boîtier 32, et est manœuvrable, depuis l'extérieur du boîtier, par un utilisateur entre ses positions de verrouillage et de déverrouillage.

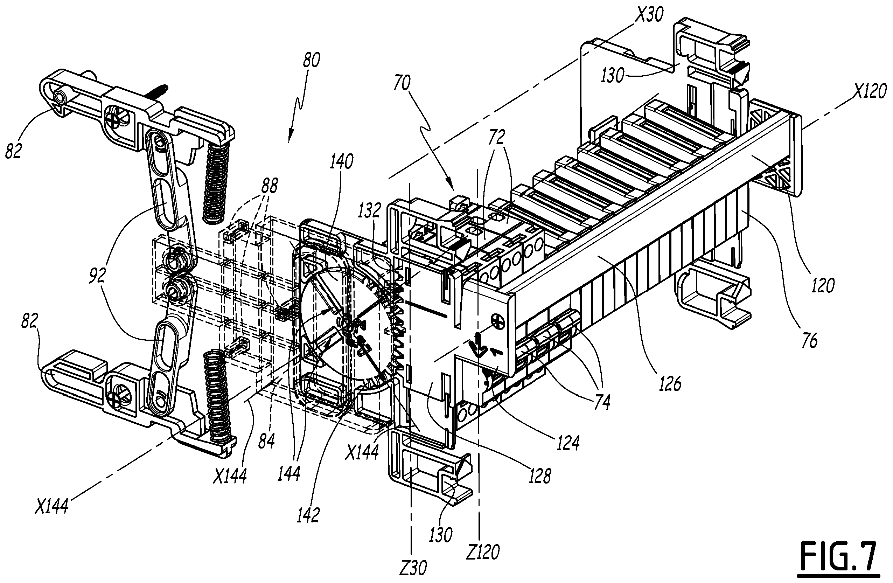

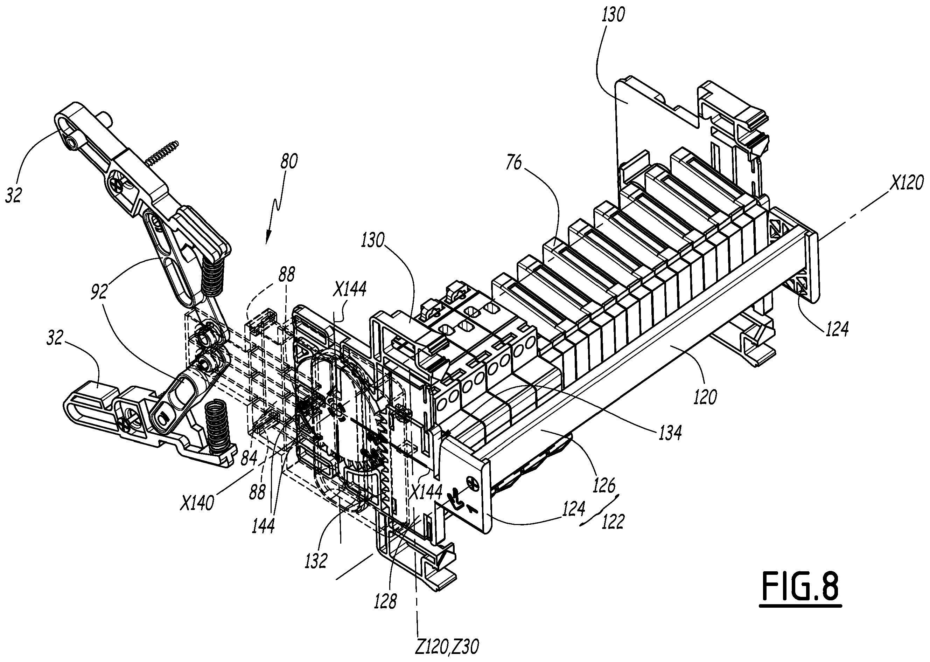

Sur les figures 7 et 8, seules une partie du mécanisme de verrouillage 80 et une partie du système de distribution électrique 60, et notamment le dispositif de coupure 70, sont représentées. De plus, sur ces figures, les poignées 84 sont représentées en transparence, ce qui est figuré par des pointillés.

Sur la figure 9, seuls le plastron ajouré 44, la barre de sécurité 120 et une partie du système de distribution électrique 60, et notamment le dispositif de coupure 70, sont représentés.

La barre de sécurité 120 comprend une partie externe 122, comprenant deux ailes externes 124 et une tige 126, chaque aile externe 124 étant disposée à proximité d'une joue 36 et la tige 126 s'étendant entre les ailes externes sur toute la largeur du plastron ajouré 44, parallèlement à l'axe de largeur X30 et selon l'axe longitudinal X120. Ainsi, la partie externe 122 s'étend avantageusement à l'extérieur du boîtier 32.

La barre de sécurité 120 comprend également deux ailes internes 128, formant ensemble une partie interne de la barre de sécurité, chaque aile interne étant portée par un support 130 du mécanisme de verrouillage 80, le support 130 étant porté par une joue. Une seule aile interne est visible sur les figures, mais la position de l'autre aile interne se déduit de la symétrie globale de la barre de sécurité 120 par rapport à un plan perpendiculaire à l'axe X120 et médian entre les ailes externes 124. De plus, chaque aile interne 128 s'étend, parallèlement à l'axe Y30, dans le prolongement d'une aile externe 124 à l'intérieur du boîtier 32.

Avantageusement, chaque support 130 est encliqueté dans une joue 36.

En pratique, la partie externe 122 s'étend depuis la partie interne de la barre de sécurité au travers de la fenêtre 46 du plastron ajouré 44.

En pratique, la translation de la barre de sécurité 120 entre ses positions de verrouillage et de déverrouillage est guidée par les supports 130, sur lesquels les ailes internes 128 coulissent et son guidées par coopération de forme.

Avantageusement, chaque aile interne 128 comprend une crémaillère 132, qui s'étend parallèlement à l'axe de translation de barre Z120.

Avantageusement, des fentes 134 sont ménagées entre les ailes internes 128 et les ailes externes 124.

Avantageusement, lorsque la barre de sécurité 120 est basculée de sa position de verrouillage vers sa position de déverrouillage et lorsqu'un ou plusieurs leviers de commutation 74 des disjoncteurs 72 sont en position fermée, la tige 126 de la partie externe 122 entre en contact avec ces leviers de commutation, ce qui entraîne leur basculement en position ouverte. En d'autre termes, la tige 126 impacte les leviers de commutation. De plus, lorsque la barre de sécurité est en position de déverrouillage, le basculement des leviers de commutation 74 en position fermée est empêché, par blocage contre la tige 126 de la partie externe 122. Ainsi, lorsque la barre de sécurité 120 est en position de déverrouillage, le dispositif de coupure 70 est en configuration ouverte.

La barre de sécurité 120 permet donc de basculer le dispositif de coupure 70 en configuration ouverte de manière simple et rapide, en abaissant sa tige 126 de la position haute représentée à la figure 7 et sur l'insert a) de la figure 9 à la position basse représentée à la figure 8 et sur les inserts b) et c) de la figure 9.

Le mécanisme de verrouillage 80 comprend un dispositif de blocage 140, entraîné par la barre de sécurité 120. Le dispositif de blocage est prévu pour bloquer la translation des poignées 84 lorsque la barre de sécurité 120 est en position de verrouillage, et pour ne pas bloquer la translation des poignées lorsque la barre de sécurité est en position de déverrouillage.

Avantageusement, le dispositif de blocage 140 comprend deux roues dentées, mobiles en rotation, par rapport au boîtier 32, autour d'un axe de roue X140 perpendiculaire à l'axe de translation de barre Z120 et perpendiculaire à l'axe de poignée Y84. Sur les figures 7 et 8, une seule roue dentée 140 est représentée.

Les roues dentées 140 sont, en pratique, montées pivotantes sur les supports 130, et sont ainsi portées par les joues 36. Ainsi, chaque roue dentée 140 est associée à une joue 36 et à une poignée 84.

Les supports 130 portent donc la barre de sécurité 120 et les roues dentées 140, qui sont assemblés ensemble.

Chaque roue dentée 140 comprend, sur sa surface périphérie S140, plusieurs dents 142 engagées avec la crémaillère 132 d'une aile interne 128 de la barre de sécurité 120. Ainsi, une translation de la barre de sécurité autour de l'axe Z120 entraîne une rotation des roues dentées 140 autour de l'axe Z140.

Chaque roue dentée 140 comprend deux gorges 144, qui s'étendent depuis sa surface périphérique S140 en direction de l'axe de roue X140. En d'autres termes, les gorges 144 s'étendent selon des axes de gorge X144 radiaux par rapport à l'axe de roue X140. De plus, les deux gorges 144 s'étendent selon des axes de gorge X144 perpendiculaires entre eux, c'est-à-dire séparés par un secteur angulaire d'angle égal à 90°.

La roue dentée 140 portée par une joue 36 est alignée, selon l'axe de largeur X30, avec les pions 88 de la poignée 84 associée à cette roue dentée.

Pour chaque roue dentée, lorsque la barre de sécurité 120 est en position de verrouillage, les deux gorges 144 s'étendent selon des axes de gorge X144 sécants, mais non perpendiculaires, avec l'axe de poignée Y84. Dans cette position, la poignée 84 associée à une roue dentée est bloquée en position de verrouillage, car l'un des pions 88 de la poignée est en contact avec la surface périphérique S140 de la roue dentée. Dans l'exemple et comme visible à la figure 7, ce pion est le pion central de la poignée. Ce pion 88 étant en butée contre la surface périphérique S140, il ne peut pas s'engager dans une gorge 144 et la poignée est empêchée de translater en position de déverrouillage. En outre, dans cette configuration, les autres pions 88 de la poignée sont en décalage avec la roue dentée. Par « en décalage », on entend que la projection des pions 88 sur un axe perpendiculaire à l'axe de poignée X84 et perpendiculaire à l'axe de roue X140, c'est-à-dire, dans l'exemple, sur un axe parallèle à l'axe Z30, n'a aucune intersection avec la projection de la roue dentée sur ce même axe. Dans l'exemple, les deux autres pions 88 sont les pions périphériques et sont situés de part et d'autre de la roue dentée, selon l'axe Z30.

Pour chaque roue dentée, lorsque la barre de sécurité 120 est en position de déverrouillage, une première gorge 144 s'étend selon un axe de gorge X144 parallèle à l'axe de poignée Y84 et une deuxième gorge s'étend selon un axe de gorge perpendiculaire à l'axe de poignée. Dans cette position, la poignée 84 associée à une roue dentée peut basculer de sa position de verrouillage vers sa position de déverrouillage, car deux des trois pions 88 sont en décalage avec la roue dentée et le troisième pion 88, correspondant au pion qui est en butée contre la surface périphérique S140 lorsque la barre de sécurité 120 est en position de verrouillage, est aligné avec la gorge 144 s'étendant parallèlement à l'axe de poignée Y84. Ainsi, ce pion peut s'engager dans cette gorge 144, et n'empêche pas le déplacement de la poignée de sa position de verrouillage vers sa position de déverrouillage.

Sur l'insert a) de la figure 9, la barre de sécurité 120 est montrée en position de verrouillage et les leviers de commutation 74 sont représentés en position ouverte. Sur les inserts b) et c) de la figure 9, la barre de sécurité est montrée en position de déverrouillage. Sur ces deux inserts, la barre de sécurité masque les leviers de commutation 74.

Lorsque la barre de sécurité est en position de verrouillage, le plastron ajouré 44 s'engage dans les fentes 134 ménagées entre les ailes internes 128 et les ailes externes 124 de la barre de sécurité. Dans cette configuration, le démontage du plastron ajouré est impossible, même après retrait des vis 45, car le déplacement du plastron dans le plan du plastron, noté P44, est empêché par son contact avec l'armature du caisson 32, plus précisément avec les traverses 34, et avec la barre de sécurité 120, comme mieux visible à la figure 2, et le déplacement du plastron perpendiculairement au plan du plastron P44, c'est-à-dire dans une direction d'éloignement du coffret 30, est empêché par le contact du plastron avec les ailes externes 124 de la barre de sécurité, au niveau de la fente 134.

Le plan du plastron P44 est parallèle à l'axe de translation de barre Z120. En outre, dans l'exemple, ce plan est perpendiculaire à l'axe de profondeur Y30. Ainsi, dans l'exemple, la direction d'éloignement du coffret 30 est selon l'axe de profondeur Y30.

Lorsque la barre de sécurité est en position de déverrouillage, la projection de la partie externe 122 de la barre de sécurité, c'est-à-dire des ailes externes 124 et de la tige 126, dans le plan du plastron P44, est contenue dans la fenêtre 46 du plastron ajouré. En d'autres termes, le plastron ajouré 44 ne s'engage pas dans les fentes 134. Ainsi, dans cette configuration, le démontage du plastron ajouré est rendu possible par un mouvement de translation du plastron ajouré perpendiculaire au plan du plastron, c'est-à-dire dans une direction d'éloignement du coffret 30, parallèlement à l'axe Y30. Au cours de ce mouvement de translation, la partie externe 122 de la barre de sécurité passe à l'intérieur de la fenêtre 46.

Ainsi, le plastron ajouré 44 n'est démontable que lorsque la barre de sécurité 120 est en position de déverrouillage.

En outre, le plastron ajouré 44 est particulièrement simple à démonter, car son démontage ne nécessite que le basculement de la barre de sécurité en position de déverrouillage et le retrait des vis 45.

Avantageusement, les fentes 134 ont une hauteur H134, mesurée dans le plan du plastron P44 selon l'axe de translation de barre Z120, au moins égale à 50% de la hauteur H124 des ailes externes 124. Ainsi, le plastron s'engage profondément dans les fentes 134, ce qui rend plus fiable le blocage du déplacement de la translation du plastron perpendiculairement au plan du plastron P44 par la barre de sécurité 120.

Avantageusement, la hauteur H46 de la fenêtre 46 du plastron ajouré, mesurée dans le plan du plastron P44 selon l'axe de translation de barre Z120, est sensiblement égale, au jeu de fonctionnement près, à la hauteur H124 des ailes externes 124. De manière générale, la hauteur de la partie externe 122 de la barre de sécurité 120 est sensiblement égale à la hauteur de la fenêtre 46, sans être supérieure.

En variante, la hauteur de la partie externe 122 de la barre de sécurité 120 est strictement inférieure à la hauteur H46 de la fenêtre 46.

Le fait que les poignées 84 sont manœuvrables depuis l'extérieur du coffret de dérivation 30 est particulièrement avantageux, car cela permet de monter et de démonter le coffret de dérivation du jeu de barres 14 sans avoir à accéder à l'intérieur du coffret, c'est-à-dire sans avoir à démonter l'un des plastrons 40, notamment le plastron ajouré 44.

Grâce à la barre de sécurité 120, l'actionnement des poignées 84 n'est possible que lorsque le dispositif de coupure 70 est en configuration ouverte, ce qui est particulièrement avantageux. En effet, le démontage du coffret de dérivation 30 est ainsi sécurisé, car il n'est pas possible de le démonter le coffret de dérivation du jeu de barres 14 lorsque les circuits électriques qui y sont raccordés sont électriquement alimentés.

Le fait que le plastron ajouré 44 soit démontable uniquement lorsque la barre de sécurité 120 est en position de déverrouillage est particulièrement avantageux, car cela permet d'accéder à l'intérieur du coffret de dérivation 30 uniquement lorsque le dispositif de coupure est en configuration ouverte, ce qui est plus sécurisé. En effet, cela permet d'empêcher l'accès à l'intérieur du coffret lorsque les raccordements électriques du dispositif de distribution électrique de sortie 66 sont sous tension. Grâce à ce système, il est possible d'effectuer des opérations de maintenance à l'intérieur du coffret 30 simplement et en sécurité. En outre, le plastron ajouré 44 est plus simple et moins onéreux à mettre en œuvre qu'une porte, ce qui facilite la fabrication du coffret de dérivation 30 ainsi que son coût.

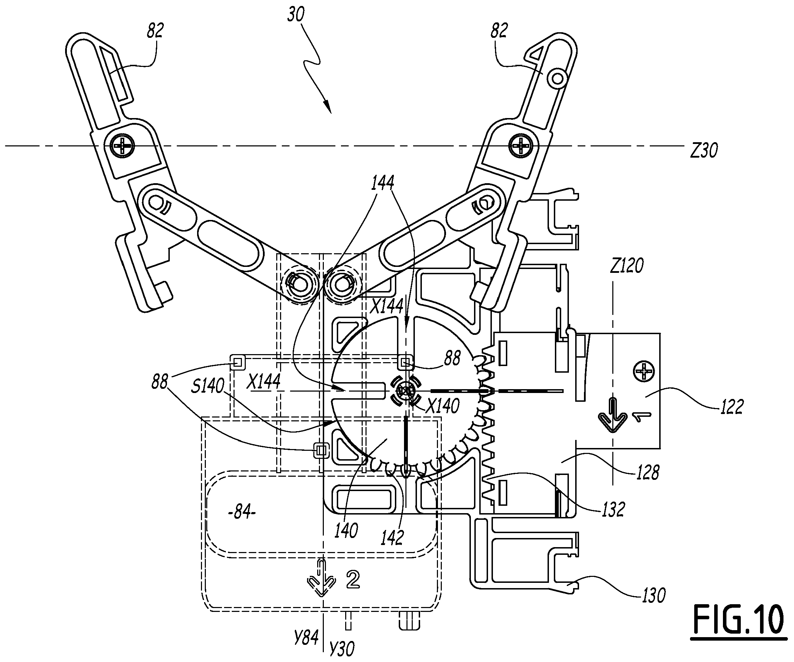

Un deuxième mode de réalisation du coffret de dérivation 30 est représenté en figure 10. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation. En outre, si un composant est mentionné dans la description de deuxième mode de réalisation sans être représenté sur la figure 10, il correspond au même élément représenté sur les figures 1 à 9 pour le premier mode de réalisation.

Ce mode de réalisation peut être mise en œuvre dans le cas d'un coffret de dérivation 30 suspendu sous le jeu de barres 14, avec les disjoncteurs 72 disposés sur un côté du boîtier, et non pas en dessous du boîtier, ce qui est le cas si le coffret de dérivation est selon le premier mode de réalisation.

Dans le deuxième mode de réalisation, le plastron ajouré 44 est perpendiculaire au fond 38. Ainsi, le plastron ajouré est parallèle à un plastron plein 42. Les disjoncteurs 72 du dispositif de coupure 70 sont alors orientés perpendiculairement par rapport aux disjoncteurs du premier mode de réalisation, de sorte à être disposés sur le côté du boîtier comprenant le plastron ajouré 44. Pour permettre l'actionnement de leur levier de commutation 74 par la barre de sécurité 120, la barre de sécurité est également orientée perpendiculairement par rapport à la barre de sécurité du premier mode de réalisation, de sorte à s'étendre au travers de la fenêtre 46 du plastron ajouré 44. Ainsi, l'axe de translation de barre Z120 est, dans cet exemple, parallèle à l'axe de profondeur Y30 et à l'axe de poignée Y84.

En pratique, la barre de sécurité 120 étant assemblée avec les supports 130 et les roues dentées 140, ces éléments sont également orientés perpendiculairement par rapport aux supports et aux roues dentées du premier mode de réalisation.

Selon un aspect particulièrement avantageux de l'invention, ce changement d'orientation et de positionnement de la barre de sécurité 120 et des roues dentées 140 ne change pas le fonctionnement du mécanisme de verrouillage 80, et plus particulièrement, ne change pas l'interaction entre les poignées 84 et le dispositif de blocage 140 formé par les roues dentées. En effet, les pions 88 sont avantageusement positionnés, sur les poignées 84, de sorte que dans l'orientation du deuxième mode de réalisation, lorsque la barre de sécurité 120 est en position de verrouillage, l'un des deux pions périphériques peut s'engager dans l'une des deux gorges 144 des roues dentées, et de sorte que, lorsque la barre de sécurité est en position de déverrouillage, ce même pion périphérique est en butée contre la surface périphérique S140. Le blocage des poignées 84 est ainsi assuré par les roues dentées 140 de la même manière que dans le premier mode de réalisation.

En pratique, lorsque la poignée 120 est en position de déverrouillage, l'axe de gorge X144 s'étendant parallèlement à l'axe de poignée Y84 dans la configuration du premier mode de réalisation, s'étend perpendiculairement à l'axe de poignée Y84 dans la configuration du deuxième mode de réalisation.

Le fait que les roues dentées 140 comprennent chacune deux gorges 144 disposées perpendiculairement entre elles est particulièrement avantageux, car cela permet que, quelle que soit l'orientation des roues dentées 140, et donc de la barre de sécurité 120 et des disjoncteurs 72, l'une des deux gorges 144 d'une roue est toujours orientée parallèlement à l'axe de poignée Y84, lorsque la barre de sécurité est en position de verrouillage. Grâce à cette polyvalence, les disjoncteurs 72 et la barre de sécurité 120 peuvent indifféremment être installés sur un côté du boîtier parallèle, ou perpendiculaire, au fond 38, ce qui rend le coffret de dérivation 30 modulaire et personnalisable.

En outre, il est particulièrement avantageux que la poignée 84 comprenne deux pions périphériques 88. En effet, en variante, le coffret de dérivation comprend deux plastrons ajourés 44, disposés parallèlement entre eux et perpendiculairement au fond 38, sur deux côtés opposés du coffret de dérivation, et deux dispositifs de coupure 70 comprenant chacun des disjoncteurs 72 disposés sur les deux côtés du boîtier 32 comprenant les plastrons ajourés 44. Le mécanisme de verrouillage comprend alors deux barres de sécurité 120, chaque barre de sécurité s'étendant au travers de la fenêtre 46 de l'un des deux plastrons ajourés 44 et pouvant commuter l'un des deux dispositifs de coupure 70, et quatre roues dentées 140, chaque barre de sécurité entraînant deux roues dentées. En d'autres termes, dans cette variante, le coffret de dérivation 30 comprend deux barres de sécurité et deux paires de roues dentées disposées en miroir les unes des autres.

Dans une telle variante, la translation d'une poignée 84 peut être bloquée par deux roues dentées, car lorsque les deux poignées sont en position de verrouillage, un premier pion périphérique 88 d'une poignée bute sur la surface périphérique S140 d'une première roue dentée et un deuxième pion périphérique bute sur la surface périphérique d'une deuxième roue dentée. Lorsque les deux barres de sécurité sont en position de déverrouillage, les deux pions périphériques 88 d'une poignée s'engagent dans deux des gorges 144 des deux roues dentées associées à cette poignée. Lorsqu'une barre de sécurité est en position de déverrouillage et qu'une barre de sécurité est en position de verrouillage, la translation des poignées 84 vers leur position de déverrouillage est empêchée par le blocage de l'un des pions 88 de chaque poignée contre la surface périphérique S140 de l'une des roues dentées 140.

Ainsi, dans une telle variante, le démontage du coffret de dérivation 30 du jeu de barres 14 n'est possible que lorsque les deux barres de sécurité 120 sont en position de déverrouillage, ce qui assure que le coffret n'est démontable que lorsque les deux dispositifs de coupure sont en configuration ouverte.

En variante, le mécanisme de verrouillage 80 comprend un nombre différent de crochets 82, par exemple deux ou six crochets, qui peuvent être disposés sur les joues 36 ou à d'autres emplacements du boîtier 32, de sorte à permettre la fixation du boîtier sur le jeu de barres 14. Par exemple, le mécanisme comprend un crochet par joue 36, ou encore deux crochets par joue 36 et deux crochets disposés sur le fond 38.

En variante, le mécanisme de verrouillage 80 comprend un nombre différent de poignées 84, par exemple une seule poignée entraînant l'ensemble des crochets 82. Dans une telle variante, le coffret de dérivation 30 est adapté en conséquence, par exemple en ne prévoyant qu'une seule roue dentée 140 et qu'un seul loquet 100.

En variante, les crochets 82 ne sont pas portés par les joues 36 mais, par exemple, par le fond 38.

En variante, chaque poignée 84 comprend un nombre différent de pions 88, par exemple un seul pion, deux pions ou au moins quatre pions.

En variante, la barre de sécurité 120 est mobile en rotation autour d'un axe perpendiculaire à l'axe de poignée Y84 entre sa position de verrouillage et sa position de déverrouillage, et les crémaillères 132 sont remplacées par des pignons entraînant en rotation les roues dentées 140.

En variante, le dispositif de blocage 140 comprend une seule gorge 144, prévue pour être parallèle à l'axe de poignée Y84 lorsque la barre de sécurité 120 est en position de déverrouillage.

En variante, le dispositif de blocage 140 comprend une seule roue dentée 140, permettant le blocage d'une seule poignée 84.

En variante, la barre de sécurité 120, lorsqu'elle est déplacée en position de déverrouillage, bascule les disjoncteurs 72 en configuration ouverte sans agir sur leurs leviers de commutation 74, par exemple en actionnant un mécanisme d'ouverture interne aux disjoncteurs.

En variante, le dispositif de coupure 70 comprend un sectionneur et la barre de sécurité 120, lorsqu'elle est déplacée en position de déverrouillage, isole les connecteurs électriques d'entrée 62 du dispositif de distribution électrique de sortie 66 en actionnant le sectionneur. Dans une telle variante, le dispositif de coupure 70 peut ne pas comprendre de disjoncteurs 72.

Toute caractéristique décrite pour un mode de réalisation ou une variante dans ce qui précède peut être mise en œuvre pour les autres modes de réalisation et variantes décrits précédemment, pour autant que techniquement faisable et toujours dans l'étendue de la protection définit par les revendications.

## Revendications

1. Coffret de dérivation (30) pour jeu de barres (14) comprenant :
- un boîtier (32),
- un mécanisme de verrouillage (80), configuré pour permettre le verrouillage du boîtier (32) sur un jeu de barres (14), et comprenant :
∘ au moins deux crochets (82), montés mobiles par rapport au boîtier (32) entre une position de verrouillage, dans laquelle le boîtier est configuré pour être verrouillé sur le jeu de barres, et une position de déverrouillage, dans laquelle le boîtier est configuré pour ne pas être verrouillé sur le jeu de barres ; et
∘ une poignée (84), manœuvrable depuis l'extérieur du boîtier (32), mécaniquement reliée aux crochets et mobile en translation selon un axe de poignée (Y84) entre une position de verrouillage, dans laquelle les crochets sont en position de verrouillage, et une position de déverrouillage, dans laquelle les crochets sont en position de déverrouillage,
- un système de distribution électrique (60), comprenant :
∘ des connecteurs électriques d'entrée (62), configurés pour être électriquement connectés au jeu de barres lorsque le boîtier est verrouillé sur le jeu de barres ;
∘ un dispositif de distribution électrique de sortie (66), configuré pour alimenter un circuit électrique aval ; et
∘ un dispositif de coupure (70), configuré pour être commutable entre :
▪ une configuration fermée, dans laquelle le dispositif de coupure connecte les connecteurs électriques d'entrée au dispositif de distribution électrique ; et
▪ une configuration ouverte, dans laquelle le dispositif de coupure isole les connecteurs électriques d'entrée du dispositif de distribution électrique,
le dispositif de coupure comprenant au moins un levier de commutation (74), mobile entre une position fermée dans laquelle le dispositif de coupure est en configuration fermée, et une position ouverte, dans laquelle le dispositif de coupure est en configuration ouverte,
dans lequel le mécanisme de verrouillage (80) comprend, en outre, une barre de sécurité (120), mobile entre :
- une position de verrouillage, dans laquelle la barre de sécurité empêche le déplacement de la poignée (84) de sa position de verrouillage vers sa position de déverrouillage ; et
- une position de déverrouillage, dans laquelle le dispositif de coupure (70) est en configuration ouverte, et dans laquelle la barre de sécurité n'empêche pas le déplacement de la poignée,
**caractérisé en ce que** la barre de sécurité (120) s'étend partiellement en-dehors du boîtier (32), et est manœuvrable, depuis l'extérieur du boîtier, par un utilisateur entre ses positions de verrouillage et de déverrouillage, et **en ce que**, lorsque la barre de sécurité (120) est basculée de sa position de verrouillage vers sa position de déverrouillage, et lorsqu'un ou plusieurs leviers de commutation (74) du dispositif de coupure (70) sont en position fermée, une tige (126) de la barre de sécurité (120) impacte ces leviers de commutation, et **en ce que** le basculement de la barre de sécurité (120) de sa position de verrouillage vers sa position de déverrouillage entraîne le basculement du levier de commutation (74) du dispositif de coupure (70) de sa position fermée vers sa position ouverte.

2. Coffret de dérivation (30) selon la revendication 1, dans lequel le mécanisme de verrouillage (80) comprend, en outre, un loquet de verrouillage (100), mobile entre :
- une position de verrouillage, dans laquelle le loquet de verrouillage empêche le déplacement de la poignée (84) de sa position de verrouillage vers sa position de déverrouillage ; et
- une position de déverrouillage, dans laquelle le loquet de verrouillage n'empêche pas le déplacement de la poignée,
le loquet de verrouillage étant configuré pour pouvoir être actionné de sa position de verrouillage vers sa position de déverrouillage à l'aide d'un outil par un utilisateur.

3. Coffret de dérivation (30) selon la revendication 2, dans lequel :
- le mécanisme de verrouillage (80) comprend un organe de rappel (102), exerçant un effort élastique sur le loquet de verrouillage (100), par rapport au boîtier (32), tendant à basculer le loquet de verrouillage de sa position de déverrouillage vers sa position de verrouillage ;
- le boîtier comprend un cran de blocage (108) ;
- le loquet de verrouillage comprend un ergot (106), coopérant avec le cran de blocage pour maintenir le loquet de verrouillage en position de déverrouillage ; et
- la poignée (84) comprend un taquet (90), permettant de désengager l'ergot du cran de blocage lorsque la poignée est basculée de sa position de verrouillage vers sa position de déverrouillage, de sorte à ramener le loquet de verrouillage en position de verrouillage sous l'effet de l'organe élastique de rappel.

4. Coffret de dérivation (30) selon l'une quelconque des revendications précédentes, dans lequel le mécanisme de verrouillage (80) comprend, en outre, un dispositif de blocage (140) de la poignée (84), entraîné par la barre de sécurité (120) et configuré pour que, en position de verrouillage de la barre de sécurité, la translation de la poignée selon l'axe de poignée (Y84) est empêchée, et pour que, en position de déverrouillage de la barre de sécurité, la translation de la poignée n'est pas empêchée.

5. Coffret de dérivation (30) selon la revendication 4, dans lequel la barre de sécurité (120) est mobile entre la position de verrouillage et la position de déverrouillage par un mouvement de translation selon un axe de translation de barre (Y120) parallèle à une face du boîtier (32) et parallèle ou perpendiculaire à l'axe de poignée (Y84), dans lequel la barre de sécurité comprend une crémaillère (132) s'étendant selon l'axe de barre, et dans lequel le dispositif de blocage (140) de la poignée (84) est une roue dentée, entraînée en rotation par la crémaillère autour d'un axe de roue (X140) perpendiculaire à l'axe de barre.

6. Coffret de dérivation (30) selon la revendication 5, dans lequel la poignée (84) comprend un pion de blocage (88), dans lequel la roue dentée (140) comprend une gorge (144) et dans lequel :
- lorsque la barre de sécurité (120) est en position de déverrouillage, la gorge s'étend selon un axe de gorge (X144) parallèle à l'axe de poignée (Y84), de sorte que le pion de blocage puisse s'engager dans la gorge lorsque la poignée est basculée de sa position de verrouillage vers sa position de déverrouillage ; et
- lorsque la barre de sécurité est en position de verrouillage, la gorge s'étend selon un axe de gorge (X144) sécant avec l'axe de poignée (Y84), de sorte que le pion de blocage est en butée contre une surface périphérique (S140) de la roue dentée et ne peut pas s'engager dans la gorge.

7. Coffret de dérivation (30) selon la revendication 6, dans lequel la roue dentée (140) comprend deux gorges (144), les deux gorges s'étendant selon deux axes de gorge (X144) perpendiculaires entre eux, et dans lequel :
- lorsque la barre de sécurité (120) est en position de déverrouillage, une première gorge s'étend selon un axe de gorge parallèle à l'axe de poignée (Y84) et une deuxième gorge s'étend selon un axe perpendiculaire à l'axe de poignée ; et
- lorsque la barre de sécurité est en position de verrouillage, les gorges s'étendent chacune selon un axe de gorge sécant et non-perpendiculaire avec l'axe de poignée.

8. Coffret de dérivation (30) selon l'une quelconque des revendications précédentes, dans lequel le mécanisme de verrouillage (80) comprend au moins deux organes de rappel (94) exerçant chacun un effort élastique sur un crochet (82), par rapport au boîtier (32), tendant à déplacer les crochets en position de verrouillage, et comprend un organe de rappel (96) exerçant un effort élastique sur la poignée (84), par rapport au boîtier, tendant à déplacer la poignée en position de verrouillage.

9. Coffret de dérivation (30) selon l'une quelconque des revendications précédentes, dans lequel le boîtier (32) comprend deux joues (36) parallèles entre elles, dans lequel le mécanisme de verrouillage (80) comprend quatre crochets (82) et deux poignées (84), chaque joue portant deux crochets et une poignée, la poignée portée par une joue étant mécaniquement reliée aux deux crochets portés par cette joue.

## Patentansprüche

1. Abzweigkasten (30) für Sammelschiene (14), umfassend:
- ein Gehäuse (32),
- einen Verriegelungsmechanismus (80), der konfiguriert ist, um die Verriegelung des Gehäuses (32) an einer Sammelschiene (14) zu ermöglichen, und umfassend:
∘ mindestens zwei Haken (82), die in Bezug auf das Gehäuse (32) zwischen einer Verriegelungsposition, in der das Gehäuse konfiguriert ist, um an der Sammelschiene verriegelt zu sein, und einer Entriegelungsposition, in der das Gehäuse konfiguriert ist, um nicht an der Sammelschiene verriegelt zu sein, beweglich montiert sind; und
∘ einen von außerhalb des Gehäuses (32) bedienbaren Griff (84), der mechanisch mit den Haken verbunden ist und entlang einer Griffachse (Y84) zwischen einer Verriegelungsposition, in der sich die Haken in der Verriegelungsposition befinden, und einer Entriegelungsposition, in der sich die Haken in der Entriegelungsposition befinden, translatorisch beweglich ist,
- ein Stromverteilungssystem (60), umfassend:
∘ Eingangsstromverbinder (62), die konfiguriert sind, um elektrisch mit der Sammelschiene verbunden zu werden, wenn das Gehäuse an der Sammelschiene verriegelt ist;
∘ eine Ausgangsstromverteilungsvorrichtung (66), die konfiguriert ist, um einen stromabwärtigen Stromkreis mit Strom zu versorgen; und
o eine Unterbrechungsvorrichtung (70), die konfiguriert ist, um umschaltbar zu sein zwischen:
▪ einer geschlossenen Konfiguration, in der die Unterbrechungsvorrichtung die Eingangsstromverbinder mit der Stromverteilungsvorrichtung verbindet; und
▪ einer offenen Konfiguration, in der die Unterbrechungsvorrichtung die Eingangsstromverbinder von der Stromverteilungsvorrichtung isoliert,
die Unterbrechungsvorrichtung umfassend mindestens einen Schalthebel (74), der zwischen einer geschlossenen Position, in der die Unterbrechungsvorrichtung in der geschlossenen Konfiguration ist, und einer offenen Position, in der die Unterbrechungsvorrichtung in der offenen Konfiguration ist, beweglich ist,
wobei der Verriegelungsmechanismus (80) ferner eine Sicherheitsstange (120) umfasst, die beweglich ist zwischen:
- einer Verriegelungsposition in der die Sicherheitsstange die Bewegung des Griffs (84) aus seiner Verriegelungsposition in seine Entriegelungsposition verhindert; und
- einer Entriegelungsposition, in der die Unterbrechungsvorrichtung (70) in der offenen Konfiguration ist, und in der die Sicherheitsstange die Bewegung des Griffs nicht verhindert,
**dadurch gekennzeichnet, dass** sich die Sicherheitsstange (120) teilweise außerhalb des Gehäuses (32) erstreckt und von außerhalb des Gehäuses durch einen Benutzer zwischen ihrer verriegelten und ihrer entriegelten Position betätigt werden kann, und dass, wenn die Sicherheitsstange (120) von ihrer Verriegelungsposition in ihre Entriegelungsposition geschwenkt wird, und wenn ein oder mehrere Schalthebel (74) der Unterbrechungsvorrichtung (70)
in der geschlossenen Position sind, ein
Stift (126) der Sicherheitsstange (120) auf diese Schalthebel einwirkt,
und dass das Schwenken der Sicherheitsstange (120) aus ihrer Verriegelungsstellung in ihre Entriegelungsstellung das Schwenken des Schalthebels (74) der Unterbrechungsvorrichtung (70) aus seiner geschlossenen Stellung in seine geöffnete Stellung bewirkt.

2. Abzweigkasten (30) nach Anspruch 1, wobei der Verriegelungsmechanismus (80) ferner einen Verriegelungsriegel (100) umfasst, der beweglich ist zwischen:
- einer Verriegelungsposition in der der Verriegelungsriegel die Bewegung des Griffs (84) aus seiner Verriegelungsposition in seine Entriegelungsposition verhindert; und
- einer Entriegelungsposition, in der die Verriegelungsriegel die Bewegung des Griffs nicht verhindert,
wobei der Verriegelungsriegel konfiguriert ist, um von einem Benutzer mittels eines Werkzeugs aus seiner Verriegelungsposition in seine Entriegelungsposition betätigt zu werden.

3. Abzweigkasten (30) nach Anspruch 2, wobei:
- der Verriegelungsmechanismus (80) ein Rückholelement (102) umfasst, das eine elastische Kraft auf den Verriegelungsriegel (100) in Bezug auf das Gehäuse (32) ausübt, die dazu neigt, den Verriegelungsriegel aus seiner Entriegelungsposition in seine Verriegelungsposition zu schwenken;
- das Gehäuse eine Arretierraste (108) umfasst;
- der Verriegelungsriegel einen Zapfen (106) umfasst, der mit der Arretierraste zusammenwirkt, um den Verriegelungsriegel in der Entriegelungsposition zu halten; und
- der Griff (84) einen Mitnehmer (90) umfasst, der es ermöglicht, den Zapfen aus der Arretierraste zu lösen, wenn der Griff aus seiner Verriegelungsposition in seine Entriegelungsposition geschwenkt wird, sodass der Verriegelungsriegel durch die Wirkung des elastischen Rückholelements in die Verriegelungsposition zurückgebracht wird.

4. Abzweigkasten (30) nach einem der vorherigen Ansprüche, wobei der Verriegelungsmechanismus (80) ferner eine Blockiervorrichtung (140) des Griffs (84) umfasst, die von der Sicherheitsstange (120) angetrieben wird und konfiguriert ist, damit die Verschiebung des Griffs entlang der Griffachse (Y84) in der Verriegelungsposition der Sicherheitsstange verhindert wird, und damit die Translation des Griffs in der Entriegelungsposition der Sicherheitsstange nicht verhindert ist.

5. Abzweigkasten (30) nach Anspruch 4, wobei die Sicherheitsstange (120) entlang einer Stangen-Translationsachse (Y120) zwischen der Verriegelungsposition und der Entriegelungsposition durch eine Translationsbewegung beweglich ist, die parallel zu einer Seite des Gehäuses (32) und parallel oder senkrecht zu der Griffachse (Y84) ist, wobei die Sicherheitsstange eine Zahnstange (132) umfasst, die sich entlang der Stangenachse erstreckt, und wobei die Blockiervorrichtung (140) des Griffs (84) ein Zahnrad ist, das von der Zahnstange um eine Radachse (X140) senkrecht zu der Stangenachse gedreht wird.

6. Abzweigkasten (30) nach Anspruch 5, wobei der Griff (84) einen Sperrstift (88) aufweist, wobei das Zahnrad (140) eine Nut (144) aufweist und wobei:
- wenn die Sicherheitsstange (120) in der Entriegelungsposition ist, sich die Nut entlang einer Nutachse (X144) parallel zu der Griffachse (Y84) erstreckt, so dass der Sperrstift in die Nut eingreifen kann, wenn der Griff aus seiner Verriegelungsposition in seine Entriegelungsposition geschwenkt wird; und
- wenn die Sicherheitsstange in der Verriegelungsposition ist, sich die Nut entlang einer Nutachse (X144), die die Griffachse (Y84) schneidet, erstreckt, sodass der Sperrstift an einer Umfangsfläche (S140) des Zahnrads anliegt und nicht in die Nut eingreifen kann.

7. Abzweigkasten (30) nach Anspruch 6, wobei das Zahnrad (140) zwei Nuten (144) umfasst, wobei sich die zwei Nuten entlang zweier senkrecht zueinander stehender Nutachsen (X144) erstrecken, und wobei:
- wenn die Sicherheitsstange (120) in der Entriegelungsposition ist, sich eine erste Nut entlang einer Nutachse parallel zu der Griffachse (Y84) erstreckt und sich eine zweite Nut entlang einer Achse senkrecht zu der Griffachse erstreckt; und
- wenn die Sicherheitsstange in der Verriegelungsposition ist, sich die Nuten jeweils entlang einer Nutenachse erstrecken, die die Griffachse schneidet und nicht senkrecht zu dieser ist.

8. Abzweigkasten (30) nach einem der vorherigen Ansprüche, wobei der Verriegelungsmechanismus (80) mindestens zwei Rückholelemente (94) umfasst, die jeweils eine elastische Kraft auf einen Haken (82) in Bezug auf das Gehäuse (32) ausüben, die dazu neigen, die Haken in die Verriegelungsposition zu bewegen, und ein Rückholelement (96) umfasst, das eine elastische Kraft auf den Griff (84) in Bezug auf das Gehäuse ausübt, die dazu neigt, den Griff in die Verriegelungsposition zu bewegen.

9. Abzweigkasten (30) nach einem der vorherigen Ansprüche, wobei das Gehäuse (32) zwei Wangen (36) parallel umfasst, wobei der Verriegelungsmechanismus (80) vier Haken (82) und zwei Griffe (84) umfasst, wobei jede Wange zwei Haken und einen Griff trägt, wobei der von einer Wange getragene Griff mechanisch mit den zwei von dieser Wange getragenen Haken verbunden ist.

## Claims

1. A junction box (30) for bus bar (14) comprising:
- a housing (32),
- a locking mechanism (80), configured to allow the housing (32) to be locked to a bus bar (14), and comprising:
∘ at least two hooks (82), movably mounted with respect to the housing (32) between a locked position, in which the housing is configured to be locked to the bus bar, and an unlocked position, in which the housing is configured not to be locked to the bus bar; and
∘ a handle (84), movable from the outside of the housing (32), mechanically connected to the hooks and movable in translation along a handle axis (Y84) between a locked position, in which the hooks are in the locked position, and an unlocked position, in which the hooks are in the unlocked position,
- an electrical distribution system (60), comprising:
∘electrical input connectors (62), configured to be electrically connected to the bus bar when the housing is locked to the bus bar;
∘ an output electrical distribution device (66), configured to supply a downstream electrical circuit; and
∘ a switching device (70), configured to be switchable between:
▪ a closed configuration, in which the switching device connects the electrical input connectors to the electrical distribution device; and
▪ an open configuration, in which the isolating device isolates the electrical input connectors from the electrical distribution device,
the switching device comprising at least one switching lever (74), movable between a closed position, in which the switching device is in the closed configuration, and an open position, in which the switching device is in the open configuration,
in which the locking mechanism (80) further comprises a safety bar (120), movable between:
- a locked position, in which the safety bar prevents the handle (84) from moving from its locked position to its unlocked position; and
- an unlocked position, in which the cut-out device (70) is in the open configuration, and in which the safety bar does not prevent the handle from moving,
**characterised in that** the safety bar (120) extends partially outside the housing (32), and is movable, from outside the housing, by a user between its locked and unlocked positions, and **in that**, when the safety bar (120) is tilted from its locked position to its unlocked position, and when one or more switching levers (74) of the cut-off device (70)
are in the closed position, a
rod (126) of the safety bar (120) impacts on these switching levers,
and **in that** the tilting of the safety bar (120) from its locked position to its unlocked position causes the switching lever (74) of the switching device (70) to tilt from its closed position to its open position.

2. The junction box (30) according to claim 1, wherein the locking mechanism (80) further comprises a locking latch (100), movable between:
- a locked position, in which the locking latch prevents the handle (84) from moving from its locked position to its unlocked position; and
- an unlocked position, in which the locking latch does not prevent the handle from moving,
the locking latch being configured so that it can be operated by a user from its locking position to its unlocking position using a tool.

3. The junction box (30) according to claim 2, wherein:
- the locking mechanism (80) comprises a return member (102), exerting a resilient force on the locking latch (100), with respect to the housing (32), tending to tilt the locking latch from its unlocked position to its locked position;
- the housing comprises a locking notch (108);
- the locking notch comprises a pin (106), cooperating with the locking notch to hold the locking notch in the unlocked position; and
- the handle (84) comprises a catch (90), enabling the pin to be disengaged from the locking notch when the handle is tilted from its locking position to its unlocking position, so as to return the locking notch to the locking position under the effect of the resilient return member.

4. The junction box (30) according to any one of the preceding claims, in which the locking mechanism (80) further comprises a device (140) for blocking the handle (84), driven by the safety bar (120) and configured so that, when the safety bar is in the locked position, the handle is prevented from translating along the handle axis (Y84), and so that, when the safety bar is in the unlocked position, the handle is not prevented from translating.

5. The junction box (30) according to claim 4, in which the safety bar (120) is movable between the locked position and the unlocked position by a translational movement along a bar translation axis (Y120) parallel to a face of the housing (32) and parallel or perpendicular to the handle axis (Y84), in which the safety bar comprises a rack (132) extending along the bar axis, and in which the handle locking device (140) is a gear, rotated by the rack about a wheel axis (X140) perpendicular to the bar axis.

6. The junction box (30) according to claim 5, wherein the handle (84) comprises a locking pin (88), wherein the gear (140) comprises a groove (144) and wherein:
- when the safety bar (120) is in the unlocked position, the groove extends along a groove axis (X144) parallel to the handle axis (Y84), so that the locking pin can engage in the groove when the handle is tilted from its locked position to its unlocked position; and
- when the safety bar is in the locking position, the groove extends along a groove axis (X144) intersecting with the handle axis (Y84), so that the locking pin is in abutment against a peripheral surface (S140) of the toothed wheel and cannot engage in the groove.

7. The junction box (30) according to claim 6, wherein the gear (140) comprises two grooves (144), the two grooves extending along two groove axes (X144) perpendicular to each other, and wherein:
- when the safety bar (120) is in the unlocked position, a first groove extends along a groove axis parallel to the handle axis (Y84) and a second groove extends along an axis perpendicular to the handle axis; and
- when the safety bar is in the locked position, the grooves each extend along a groove axis that intersects and is not perpendicular to the handle axis.

8. The junction box (30) according to any one of the preceding claims, in which the locking mechanism (80) comprises at least two return members (94) each exerting a resilient force on a hook (82), relative to the housing (32), tending to move the hooks into the locking position, and comprises a return member (96) exerting a resilient force on the handle (84), relative to the housing, tending to move the handle into the locking position.

9. The junction box (30) according to any one of the preceding claims, in which the housing (32) comprises two flanges (36) parallel to each other, in which the locking mechanism (80) comprises four hooks (82) and two handles (84), each flange carrying two hooks and one handle, the handle carried by a flange being mechanically connected to the two hooks carried by that flange.
